Europäisches Patentamt

(19) European Patent Office

Office européen des brevets

(11) Veröffentlichungsnummer: **0 121 787**
**B1**

(12) **EUROPÄISCHE PATENTSCHRIFT**

(45) Veröffentlichungstag der Patentschrift:
**26.08.87**

(21) Anmeldenummer: **84102543.0**

(22) Anmeldetag: **09.03.84**

(51) Int. Cl.⁴: **E 01 C 19/26,** B 60 G 11/22

(54) Lenkachsenanordnung für einen Radkörper eines Fahrzeugs.

(30) Priorität: **02.04.83 DE 3312175**

(43) Veröffentlichungstag der Anmeldung:
**17.10.84 Patentblatt 84/42**

(45) Bekanntmachung des Hinweises auf die Patenterteilung:
**26.08.87 Patentblatt 87/35**

(84) Benannte Vertragsstaaten:
**DE FR GB IT SE**

(56) Entgegenhaltungen:
**DE - A - 3 012 003**
**DE - C - 651 355**
**GB - A - 211 379**
**GB - A - 1 224 698**
**US - A - 2 360 619**

(73) Patentinhaber: **Losenhausen Maschinenbau AG& Co Kommanditgesellschaft, Schlüterstrasse 13-19, D-4000 Düsseldorf1 (DE)**

(72) Erfinder: **Bäumers, Hans, Am Bürgerhaus 16, D-4000 Düsseldorf 12 (DE)**
Erfinder: **Lietzke, Heinz, Ittenbachstrasse 20a, D-4040 Neuss 1 (DE)**
Erfinder: **Schulte, Winfried, Herderstrasse 80, D-4030 Ratingen (DE)**

ACTORUM AG

Beschreibung

Die Erfindung betrifft eine Lenkachsenanordnung für einen Radkörper eines Fahrzeugs, das einen Fahrzeugrahmen aufweist, enthaltend

(a) einen Lenkrahmen, in welchem der Radkörper gelagert ist,

(b) eine mit dem Lenkrahmen starr verbundene vertikale Lenkachse,

(c) eine Lagerung für die Lenkachse und

(d) ein Gummielement als Tragelement zwischen Fahrzeugrahmen und Lenkachse.

Der Radkörper kann dabei beispielsweise ein Walzkörper einer Vibrations-Tandemwalze oder ein Spornrad sein.

Durch die DE-A 3 012 003 ist eine Strassenwalze mit zwei an einem Fahrzeugrahmen angeordneten Walzkörpern bekannt, von denen eine eine lenkbare Führungswalze ist. Die Führungswalze ist in einem Lenkrahmen gelagert. Mit dem Lenkrahmen ist eine vertikale Lenkachse starr verbunden. Es ist eine reibungsarme Lagerung für die Lenkachse vorgesehen. Zwischen Fahrzeugrahmen und Lenkachse sind Gummielemente als Tragelemente angeordnet. Bei der DE-A 3 012 003 ist die Lagerung für die Lenkachse auf einer Brücke angebracht, welche über zwei in Längsrichtung im Abstand voneinander liegende Gummielemente mit dem Fahrzeugrahmen verbunden sind. Diese Gummielemente gestatten ein Kippen der Führungswalze relativ zum Fahrzeugrahmen und absorbieren Stösse, die beim Aufprall der Strassenwalze auf Hindernisse entstehen. In axialer Richtung ist dort die Lenkachse gegenüber der Brücke und der Lagerung unverschiebbar gehalten.

Bei dieser Anordnung ist die Führungswalze nur über die Gummielemente mit dem Fahrzeugrahmen verbunden. Das ist eine recht unstabile Konstruktion.

Die Lenkbewegung wird bei solchen und ähnlichen Vibrations-Tandemwalzen üblicherweise durch einen hydraulisch beaufschlagten Hubzylinder bewirkt, der zwischen dem Fahrzeugrahmen und dem Lenkrahmen angeordnet ist. In vielen Fällen ist der Hubzylinder ein Doppelzylinder mit zwei gegenläufigen Arbeitsrichtungen.

Durch die DE-C 651 355 ist eine Strassenwalze bekannt, deren Lenkwalzenkörper aus zwei mit Abstand nebeneinander angeordneten Trommeln besteht. Diese Trommeln des Lenkwalzenkörpers sind auf getrennten, mit senkrechten Lagerzapfen versehenen Achsstummeln drehbar gelagert. Die Lagerzapfen sind durch eine gemeinsame Lenkwelle drehbar und in der Höhe entgegen der Wirkung von Federn verschiebbar. Die Federn sind dabei Wendelfedern, welche die Lagerzapfen umgeben.

Das ist eine komplizierte und störanfällige Spezialkonstruktion.

Der Erfindung liegt die Aufgabe zugrunde, eine einfache und stabile Lenkachsenanordung zu schaffen.

Erfindungsgemäss wird diese Aufgabe dadurch gelöst, dass

(e) die Lagerung eine Führungsbuchse enthält, (e₁) die mit dem Fahrzeugrahmen verbunden ist und (e₂) in der die Lenkachse drehbar und axial gleitend geführt ist,

(f) das Gummielement gleichachsig zu der Lenkachse vor deren Stirnfläche angeordnet ist und

(g) das Gummielement auf einer Seite mit der Lenkachse drehfest verbunden ist.

Die Lenkachse ist bei dieser Anordnung in der Führungshülse radial in dem Fahrzeugrahmen gehalten. Sie ist aber in axialer Richtung beweglich geführt. In axialer Richtung ist die Lenkachse an dem Gummielement abgestützt. Das Gummielement nimmt vertikale Stösse durch Zusammendrücken und die Lenkbewegung um die Längsache der Lenkachse durch Torsion auf.

Vorteilhafte Ausgestaltungen der Erfindung sind Gegenstand der Unteransprüche.

Ein Ausführungsbeispiel der Erfindung ist nachstehend unter Bezugnahme auf die zugehörige Zeichnung näher erläutert, die einen Vertikalschnitt durch eine Lenkachsenanordnung zeigt.

Eine Führungs- oder Lenkwalzentrommel 10 einer Vibrations-Tandemwalze ist mit einer Achse 12 in einem Lenkrahmen 14 gelagert. Der Lenkrahmen 14 ist im Querschnitt u-förmig mit einer sich oben quer über die Lenkwalzentrommel 10 erstreckenden waagrechten Platte 16 und an den Enden davon nach unten ragenden Seitenwangen 18. In den Seitenwangen ist die Lenkwalzentrommel 10 gelagert.

Zentral auf der Platte 16 sitzt eine vertikal nach oben ragende Lenkachse 20. Die Lenkachse 20 ist starr mit dem Lenkrahmen 14 verbunden. An ihrer oberen Stirnfläche trägt die Lenkachse 20 einen Flansch 22.

Eine Lagerung für die Lenkachse 20 enthält eine Führungsbuchse 24, die mit einem Fahrzeugrahmen 26 verbunden ist. In dieser Führungsbuchse 24 ist die Lenkachse 20 axial gleitend geführt. Ein als Tragelement zwischen Fahrzeugrahmen 26 und Lenkachse 20 dienendes Gummielement 28 ist gleichachsig zu der Lenkachse 20 angeordnet. Das Gummielement 28 ist auf einer Seite mit der Lenkachse 20 drehfest verbunden. Bei der dargestellten bevorzugten Ausführungsform sitzt das Gummielement 28 vor der Stirnfläche der Lenkachse 20 und ist mit dem Flansch 22 verbunden. Die Führungsbuchse 24 sitzt in einer Stirnfläche eines zylindrischen (oder sonstwie prismatischen) Gehäuses 30. Das Gehäuse 30 ist starr an dem Fahrzeugrahmen 26 angebracht. Die in der Führungsbuchse 24 geführte und drehbar gelagerte Lenkachse 20 ragt in dieses Gebäude 30 hinein. Das Gummielement 28 ist in dem Gehäuse 30 zwischen der Stirnfläche der Lenkachse 20 und der anderen, oberen Stirnfläche des Gehäuses 30 angeordnet.

Bei der dargestellten bevorzugten Ausführungsform ist die Führungsbuchse 24 in einer eine Pendelbewegung zulassenden Weise an dem Fahrzeugrahmen 26 bzw. dem damit verbundenen Gehäuse 30 gelagert. Das geschieht dadurch, dass die Führungsbuchse 24 mit einer tonnenförmigen Aussenfläche 32 in einer dazu komplementären, fahrzeugrahmenfesten Lagerfläche gelagert ist. Auf diese Weise nimmt das Gummielement 28 durch Scherung die Pendelbewegung der Lenkachse 20 um den Schwenkpunkt der Führungsbuchse 24 elastisch und dämpfend auf. Das eine Gummielement 28 wird bei axialen Kräften auf die Lenkachse 20 auf Druck beansprucht. Es lässt die Lenkbewegung unter Torsion zu und es gestattet eine Pendelbewegung unter Scherbeanspruchung.

Die Beanspruchung der Führungsbuchse 24 kann dabei gering gehalten werden, wenn die Massenverteilung des Radkörpers, d.h. hier des Lenkwalzenkörpers 10, des Fahrzeugrahmens 26 und der Lenkachse 20 (mit dem Lenkrahmen 14) so gestaltet ist, dass die zur Achse 12 des Radkörpers gehörige Stossachse dieser starren Baugruppe durch einen im wesentlichen innerhalb der Führungsbuchse 24 der Lenkachse 20 liegenden Punkt 34 geht. Ein über die Achse 12 übertragener Stoss bewirkt dann keine radiale Beanspruchung der Führungsbuchse 24.

Die Lenkbewegung wird durch einen als Doppelzylinder mit zwei gegenläufigen Arbeitsrichtungen ausgebildeten Hubzylinder 36 bewirkt, der zwischen dem Fahrzeugrahmen 26 und dem Lenkrahmen 14 angeordnet ist und seitlich von der Lenkachse 20 an dem Lenkrahmen 14 angreift.

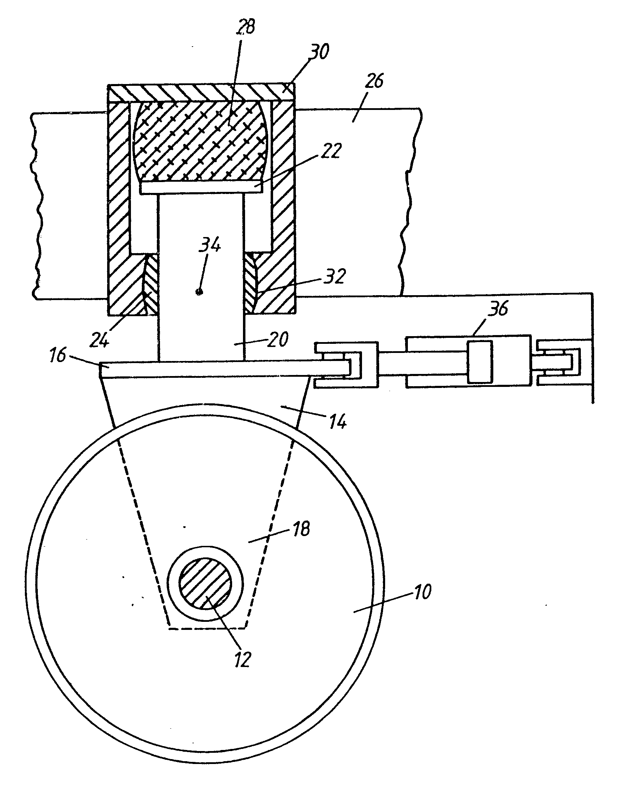

## Patentansprüche

1. Lenkachsenanordnung für einen Radkörper (10) eines Fahrzeugs, das einen Fahrzeugrahmen (26) aufweist, enthaltend

(a) einen Lenkrahmen (14), in welchem der Radkörper (10) gelagert ist,

(b) eine mit dem Lenkrahmen (14) starr verbundene vertikale Lenkachse (20),

(c) eine Lagerung (24) für die Lenkachse (20), und

(d) ein Gummielement (28) als Tragelement zwischen Fahrzeugrahmen (26) und Lenkachse (20), dadurch gekennzeichnet, dass

(e) die Lagerung eine Führungsbuchse (24) enthält, ($e_1$) die mit dem Fahrzeugrahmen (26) verbunden ist und ($e_2$) in der die Lenkachse (20) drehbar und axial gleitend geführt ist,

(f) das Gummielement (28) gleichachsig zu der Lenkachse (20) vor deren Stirnfläche angeordnet ist und

(g) das Gummielement (28) auf einer Seite mit der Lenkachse (20) drehfest verbunden ist.

2. Lenkachsenanordnung nach Anspruch 1, dadurch gekennzeichnet, dass

(a) die Führungsbuchse (24) in einer Stirnfläche eines zylindrischen Gehäuses (30) sitzt,

(b) das Gehäuse (30) starr an dem Fahrzeugrahmen (26) angebracht ist,

(c) die in der Führungsbuchse (24) geführte und drehbar gelagerte Lenkachse (20) in dieses Gehäuse (30) hineinragt und

(d) das Gummielement (28) in dem Gehäuse (30) zwischen der Stirnfläche der Lenkachse (20) und der anderen Stirnfläche des Gehäuses (30) angeordnet ist.

3. Lenkachsenanordnung nach Anspruch 1 oder 2, dadurch gekennzeichnet, dass die Führungsbuchse (24) in einer eine Pendelungsbewegung zulassenden Weise an dem Fahrzeugrahmen (26) gelagert ist.

4. Lenkachsenanordnung nach Anspruch 3, dadurch gekennzeichnet, dass die Führungsbuchse (24) mit einer tonnenförmigen Aussenfläche (32) in einer dazu komplementären, fahrzeugrahmenfesten Lagerfläche gelagert ist.

5. Lenkachsenanordnung nach einem der vorhergehenden Ansprüche, dadurch gekennzeichnet, dass die Massenverteilung des Radkörpers (10), des Fahrzeugrahmens (26) und der Lenkachse (20) so gestaltet ist, dass die zur Achse des Radkörpers (10) gehörige Stossachse dieser starren Baugruppe durch einen im wesentlichen innerhalb der Führungsbuchse (24) der Lenkachse (20) liegenden Punkt (34) geht.

## Revendications

1. Disposition d'essieu directeur pour un corps de roue (10) d'un véhicule présentant un châssis de véhicule, comprenant

(a) un châssis directeur (14) dans lequel est monté le corps de roue (10),

(b) un essieu directeur (20) rigidement relié au châssis directeur (14),

(c) un dispositif de palier (24) pour l'essieu directeur (20), et

(d) un élément en caouchouc (28) comme élément porteur entre le châssis de véhicule (26) et l'essieu directeur (20),

caractérisée par le fait que

(e) le dispositif de palier comprend une douille de guidage (24), ($e_1$) qui est reliée au châssis de véhicule (26), et ($e_2$) dans laquelle l'essieu directeur (20) est guidé de manière axialement et rotativement gissable,

(f) l'élément en caouchouc (28) est disposé équiaxialement à l'essieu directeur (20) devant ses fronts, et

(g) l'élément en caouchouc (28) est relié sur un côté à l'essieu directeur (20) de manière rotativement fixe.

2. Disposition d'essieu directeur selon la revendication 1, caractérisée par le fait que

(a) la douille de guidage (24) est située dans un front d'un boîtier cylindrique (30),

(b) le boîtier (30) est monté rigidement au châssis de véhicule (26),

(c) l'essieu directeur (20) monté rotativement et guidé dans la douille de guidage (24) s'étend dans ce boîtier (30), et

(d) l'élément en caouchouc (28) est disposé dans le boîtier (30) entre le front de l'essieu directeur (20) et l'autre front du boîtier (30).

3. Disposition d'essieu directeur selon la revendication 1 ou 2, caractérisée par le fait que la douille de guidage (24) est montée au châssis de véhicule (26) de sorte à permettre un mouvement pendulaire.

4. Disposition d'essieu directeur selon la revendication 3, caractérisée par le fait que la douille de guidage (24) est montée avec une surface extérieure (32) en forme de tonneau dans une surface de palier complémentaire à celle-ci et stationnaire par rapport au châssis de véhicule.

5. Disposition d'essieu directeur selon l'une des revendication ci-dessus, caractérisée par le fait que la repartition des masses du corps de roue (10), du châssis de véhicule (26) et de l'essieu directeur (20) est concue de sorte que l'axe d'impact de cet ensemble rigide appartenant à l'essieu du corps de roue (10) passe par un point (34) situé essentiellement à l'intérieur de la douille de guidage (24) de l'essieu directeur (20).

**Claims**

1. Steering axle assembly for a wheel body (10) of a vehicle, which has a vehicle frame (26), comprising
  (a) a steering frame (14), in which the wheel body (10) is mounted,
  (b) a steering axle (20) rigidly connected with the steering frame (14),
  (c) bearing means (24) for the steering frame (20) and
  (d) a rubber element (28) as supporting element between vehicle frame (26) and steering axle (20), characterized in that
  (e) the bearing means comprise a guide bushing (24) ($e_1$) which is connected with the vehicle frame (26) and ($e_2$) in which the steering axle (20) is rotatably and axially slidingly guided,
  (f) the rubber element (28) is arranged coaxially with respect to the steering axle (20) in front of the end face thereof, and
  (g) the rubber element (28), on one side, is non-rotatably connected with the steering axle (20).

2. Steering axle assembly as claimed in claim 1, characterized in that
  (a) the guide bushing (24) is arranged in one end face of a cylindrical housing (30),
  (b) the housing (30) is rigidly affixed to the vehicle frame (26),
  (c) the steering axle (20) guided and rotatably mounted in the guide bushing (24) extends into this housing (30), and
  (d) the rubber element (28) is arranged in the housing (30) between the end face of the steering axle (20) and the other end face of the housing (30).

3. Steering axle assembly as claimed in claim 1 or 2 characterized in that the guide bushing (24) is supported on the vehicle frame (26) in a manner permitting pendulous motion.

4. Steering axle assembly as claimed in claim 3, characterized in that the guide bushing (24) is mounted with a barrel-shaped outer surface (3) in a vehicle framefixed bearing surface complementary thereto.

5. Steering axle assembly as claimed in anyone of the preceding claims, characterized in that the mass distribution of the wheel body (10), of the vehicle frame (26) and of the steering axle (20) is such that the impact axis associated with the axis of the wheel body (10) of this rigid assembly passes through a point (34) located substantially within the guide bushing (24) of the steering axle (20).